# EUROPEAN PATENT APPLICATION

(11) **EP 0 922 478 A2**
(43) Date of publication of application: **16.06.1999**
(21) Application number: 98309329.5
(22) Date of filing: 13.11.1998
(51) Int. Cl.: B01D 39/20

(54) **Porous ceramic filter and method for producing same**

(30) Priority: 18.11.1997 US 972540; 22.10.1998 US 176759
(71) Applicant: NGK INSULATORS, LTD., Nagoya City Aichi Pref. (JP)
(72) Inventor: Blum, Yigal D., San Jose, CA 95129 (US); Johnson, Sylvia M., Piedmont, CA 94610 (US); Chen, Huiyong, San Jose, CA 95132 (US)
(74) Representative: Paget, Hugh Charles Edward

(57) **Abstract**

A porous ceramic filter and its method of production are disclosed. The ceramic filter has at least one porous layer (or skin) made of a binder formed of a cured ceramic powder or a preceramic or pyrolyzed ceramic precursor optionally containing a source of zirconia. In some embodiments, the binder is formed of the zirconia source only. The presence of the zirconia gives a skin with good mechanical strength and corrosion resistance to both acidic and basic solutions.

## Description

### Technical Field

The present invention relates generally to a porous ceramic filter containing a porous substrate and at least one porous ceramic layer provided thereon. The filter may take various geometrical forms, including, but not limited to, planar and hollow cylindrical configurations.

### Background of the Invention

The present invention is directed to a porous ceramic filter that has numerous industrial uses, including use in large-scale water purification systems. Currently, alumina-based asymmetric microfilters having a tubular (i.e., hollow cylindrical) structure are used in such large-scale water purification systems. These prior art filters have a plurality of layers formed on a filter substrate, and require a series of heating cycles, typically carried out at temperatures of at least 1400°C, to sinter the alumina particles of the filter structure. While such filters generally perform well in practical use, they are relatively expensive to manufacture due to the relatively high heating temperatures and number of heating cycles required during manufacture.

Having recognized a need in the art to provide a relatively low cost ceramic filter that performs on a level at least equal to the known filter structures, the present filter and process for producing same have been developed.

The present invention is directed to a ceramic filter having a mechanically strong filter skin wherein, in a preferred embodiment, the filter including the skin displays good corrosion resistance in both acidic and basic solutions. The inventors have found that such filters can be made when using binders containing zirconia precursors to form the filter skins. The invention also includes the formation of ceramic filters using preceramic polymers and their method of production.

The basic concept of the present invention is the use of ceramic precursors in polymeric form to produce a ceramic filter. The process of the invention consists in
forming a slurry containing a ceramic powder, and one or both of a precursor of a zirconia-based ceramic and a preceramic polymer, and a solvent for said precursor and/or said preceramic polymer;
depositing said slurry on a porous substrate to form a layer;
treating said precursor and/or preceramic polymer to form a binder; and
heating said deposited slurry to form a porous layer on the substrate.

The ceramic filters of the present invention include a porous substrate and at least one porous layer (also called a skin) formed on the porous substrate. The porous layer is formed of ceramic particles bound together by an intergranular phase made up of a ceramic precursor material or a ceramic binder formed by pyrolysis of the ceramic precursor material, as discussed in more detail hereinbelow. In a preferred embodiment, the intergranular phase also contains a source of zirconia.

The term "ceramic precursor" or "ceramic precursor material", when used in this application, means a soluble and/or meltable (and therefor capable of being fabricated) polymeric or oligomeric compound that possesses an inorganic skeleton that upon heat treatment (pyrolysis) is converted into a ceramic composition. As necessary, a curing agent may be included.

In alternative embodiments, the slurry contains a precursor or source of zirconia, which may be in polymeric form (containing Zr-o-Zr bonds).

The term "intergranular" here refers to the binder between the ceramic particles which are the principle component of the porous layer.

More particularly, ceramic filters were made by coating a slurry on a round, flat alumina substrate. However, the configuration of the substrate is not limited to a planar disk, but may preferably be formed as a hollow cylindrical tube. The substrate preferably has a porosity within the range of 20-70 vol %, more preferably 30-70% vol %. The substrates used in connection with the working examples herein had a porosity of 35 vol %. Like the porous layer to be formed on the substrate, the substrate has a three-dimensional interconnected network of pores to allow a fluid, such as water, to pass therethrough.

The slurry that was coated on the substrate contained a commercially available alumina powder, RK-1C (manufactured by NGK Insulators, Ltd.) having an average particle size of about 3.2 microns RK-02C (manufactured by NGK Insulators, Ltd.) having an average particle size of 0.7 microns.

Polyhydridomethylsiloxane (PHMS) and ethoxy-modified PHMS (EtO-PHMS) prepared according to procedures and processes described in U.S. Patent Nos. 5,128,494 and 5,635,250 were first utilized as polymer binders, and were mixed in the slurry. It was found that good slurries for forming filter layers were provided by using the modified EtO-PHMS, because hydrophilic ethoxy groups were substituted in the PHMS polymer chains, thereby making the polymer less hydrophobic. If unmodified PHMS is utilized as the binder, dehydrocoupling to convert the PHMS into a cured preceramic polymer occurs during the post fabrication curing stage by reaction with water. On the other hand, when PHMS is modified with ethoxy groups, dehydrocoupling takes place upon formation of the modified EtO-PHMS by catalytic reaction. The EtO-PHMS serves as the preceramic polymer, which is cured by hydrolysis/condensation rather than by dehydrocoupling. The catalytic dehydrocoupling reaction in connection with EtO-PHMS is provided below: 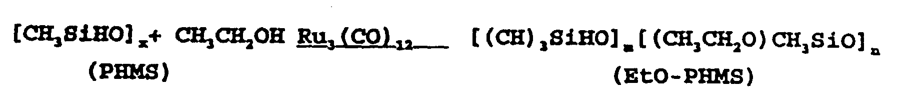 The rate of modification depends upon the amount of ruthenium catalyst, Ru₃(CO)₁₂, and alcohol added to the PHMS. About 75 % of the Si-H bonds were replaced by Si-EtO after 9 hours by addition of 150 ppm of the ruthenium catalyst to effect dehydrocoupling. More specifically, EtO-PHMS was prepared by forming a solution containing 100 grams of PHMS, 0.02 grams of Ru₃(Co)₁₂ (200 ppm based upon the amount of polymer), and 210 grams of ethanol. The solution was refluxed overnight under dry conditions to form the modified EtO-PHMS that was ready for use.

The polymer binder is not limited to those mentioned above. By way of example, HO-PHMS, a PHMS polymer modified with Si-OH groups, may also be utilized. Other high yield precursors to silica may be used, but they may also be significantly more expensive than PHMS derivatives.

While the foregoing illustrates a catalytic dehydrocoupling reaction to form a preceramic polymer for carrying out the present invention, U.S. Patents 5,405,655, 5,128,494, 5,008,422, 4,952,715, 4,788,309 provide a more comprehensive review of forming preceramic polymers by dehydrocoupling and their use as binders, the subject matter thereof being incorporated herein by reference.

During the course of research on this matter, it was found that when zirconia was present in the binders, it gave mechanically strong filter skins having improved corrosion resistance in both acidic and basic solutions. In this way the filters can be cleaned in either acidic (citric or sulfuric acid) or basic (sodium acetate, sodium hypochlorite or ammonium acetate) solutions without suffering any adverse effects.

Excellent corrosion resistance was demonstrated in a filter made from a binder containing zirconium and silicon in a 1:1 ratio and formed by mixing EtO-PHMS with zirconyl chloride in a water-alcohol solution.

The slurry was formed by mixing alumina powder, EtO-PHMS polymer, and a solvent such as ethanol or a mixture of ethanol and water. An optional pore control agent such as a decomposable polymer may be used. The slurry was ball-milled for one hour to provide a slurry that was white in color, and evenly dispersed and stable at room temperature. If an organic polymer pore control agent is used, it preferably should be mixed with the solvent before mixing with the slurry.

Before deposition of the slurry on the porous substrate, the substrate is preferably soaked in a liquid to prevent quick absorption of the polymer and solvent into the substrate by capillary forces, which would change the desired ratio of powder to polymer in the coated layer. The preferred liquid used to soak the substrate is either water or an ethanol solution (i.e., the solvent material used for the slurry).

After soaking, the substrate was coated with the slurry either by casting or by a path and wash flow technique. During casting, the substrate was placed in a round mold having a depth corresponding to the thickness of the substrate. The slurry was cast over the top of the substrate and excess material was removed by a doctor-blade technique thereby leaving a layer of slurry behind. According to the path and wash flpw technique, the substrate was placed in the mold described above, and the slurry was poured and flowed over the surface of the substrate, tilted at an angle of 45° with respect to horizontal. The path and wash flow technique was found to provide particularly uniform coatings, and is thus considered preferable.

The thus coated substrate was cured to effect crosslinking of the polymer material. Curing can take place at temperatures below 200°C. After curing, the filter may be used "as is." However, to improve strength, chemical durability and wetting characteristics, the filter was pyrolyzed at a higher temperature, within a range of 450°C to 900°C, more preferably 500°C to 700°C, to convert the now cured polymer (i.e., preceramic polymer binder) to a ceramic product, particularly, amorphous silica. Accordingly, the final structure of the porous layer includes alumina particles bound together by an amorphous silica intergranular phase.

In more detail, the substrate coated with the slurry layer was heated at 5°C/min to 150-200°C and held at 150-200°C for two hours. Thereafter, the coated substrate was heated at 5-10°C/min. to 500°C and held for 5 hours or less at 500°C. By pyrolyzing the coated substrate at a temperature above 450°C, the coating provided on the substrate was converted from a hydrophobic state to a hydrophilic state.

Pyrolysis at a temperature below 450°C may be effected when utilizing HO-PHMS to convert the coating to a completely inorganic hydrophilic state. Additionally, those embodiments containing an organic polymer pore control agent (such as polyamides) required pyrolysis above 450°C to burn out the additive. However, lower temperatures may be utilized for other contemplated pore control agents such as polyethers, polyacetates, and polyvinylalcohols.

After pyrolysis, the filter was evaluated for corrosion resistance. Particularly, the filtration property permeance was evaluated by measuring the amount of water that passes through the filter per unit area of the filter per KPa over the course of a day. The permeance measurements were taken at 1 to 45 KPa. The properties of numerous embodiments of the filter formed according to the present invention are recorded below in Tables 1A and 1B.

In Tables 1A and 1B, sample nos. 16-5, 17-3, 18-3 and 19-3 had dual layer structures, including two porous layers provided on the porous substrate. Further, reference examples REF 2 and REF 3 are embodiments of prior art, sintered filters, provided for comparative purposes.

**TABLE 1A**

| PREPARATION, FORMULATION AND FILTRATION PROPERTIES | | | | | |
|---|---|---|---|---|---|
| Sample | Type of Al₂O₃ | Coating Method | Binder Wt.% | Polyamide Wt%/Solvent | Permeance (m³/m²·day ·Kpa) |
| 1 | RK-02C | Casting | 10 | | |
| 2 | RK-02C | Casting | 20 | | 0.13 |
| 3 | RK-1C | Casting | 8 | | |
| 4 | RK-1C | Casting | 10 | | |
| 5 | RK-1C | Casting | 15 | | |
| 6 | RK-1C | Casting | 5 | | |
| 7 | RK-1C | Casting | 8 | | |
| 8 | RK-1C | Casting | 10 | | |
| 9 | RK-02C | Casting | 10 | 8/EtOH | |
| 10 | RK-02C | Casting | 10 | 5/PrOH | |
| 11 | RK-02C | Casting | 10 | 10/PrOH | |
| 12 | RK-02C | Casting | 10 | 15/PrOH | |
| 13 | RK-02C | Casting | 20 | 10/PrOH | |
| 14 | RK-02C | Casting | 20 | 5/PrOH | |
| 15-1 | RK-02C | Casting | 15 | 5/PrOH | |
| 15-1 | RK-02C | Path and wash | 15 | 5/PrOH | 0.22 |
| 16-1 | RK-02C | Casting | 15 | 10/PrOH | |
| 16-2 | RK-02C | Casting | 15 | 10/PrOH | |
| 16-3 | RK-02C | Path and wash | 15 | 10/PrOH | 1.2 |
| 16-4 | | | | | |
| 16-5 2nd layer on 16-3 | RK-02C | Path and wash | 15 | 10/PrOH | 0.17 |
| 17-1 | RK-1C | Path and wash | 15 | | 0.96 |

**TABLE 1B**

| PREPARATION, FORMULATION AND FILTRATION PROPERTIES | | | | | |
|---|---|---|---|---|---|
| Sample | Type of Al₂O₃ | Coating Method | Binder Wt.% | Polyamide Wt%/Solvent | Permeance (m³/m².day .KPa) |
| 17-2 | RK-1C | Path and wash | 15 | | |
| 17-3 2nd layer on 17-1 | RK-1C | Path and wash | 15 | | 1.06 |
| 18-1 | RK-1C | Path and wash | 20 | | 0.54 |
| 18-2 | RK-1C | Path and wash | 20 | | |
| 18-3 2nd layer on 18-1 | RK-1C | Path and wash | 20 | | |
| 19-1 | RK-1C | Path and wash | 10 | | 1.05 |
| 19-2 | RK-1C | Path and wash | 10 | | |
| 19-3 2nd layer on 19-1 | RK-1C | Path and wash | 10 | | 0.89 |
| 21-1 | RK-02C | Path and wash | 15 | | |
| 21-2 | RK-02C | Path and wash | 15 | | |
| REF 2 | 1 layer RK-02C 2 layers RK-1C | | | | |
| REF 3 | 1 layer RK-02C layers 2 RK-1C | | | | |

As shown in Tables 1A and 1B, filters based on the larger alumina particle size (RK-1C) demonstrated higher permeability that the smaller particle size (RK-02C) based filter for the same polymer/powder ratio. Further, the permeability of the RK-1C based filters decreased by addition from 15% to 20%.

The porosity and the skeletal density of the porous layer of several embodiments of the present filter are summarized below in Table 2.

**TABLE 2**

| Porous Layer | Type of Al₂O₃ | Porosity (vol%) | Density (g/cm³) |
|---|---|---|---|
| 10% EtO-PHMS | RK-1C | 45.8 | 3.879 |
| 20% EtO-PHMS | RK-1C | 47.1 | 3.915 |
| 15% EtO-PHMS* | RK-1C | 53.6 | 4.036 |

| | | | |
|---|---|---|---|
| *contains 10% polyamide | | | |

As shown, the porosity of the porous layer fell within the target range of 20-70% vol% and the preferable target range of 30-70 vol%. Porosity of the porous layer may be modified by altering the particular type of polymer binder utilized, particle size/particle size distribution of the alumina power, ratio between the polymer and binder, amount of solvent, and inclusion of pore size control agents such as polyamide.

In addition, mercury porisometry showed that the porous layer had fairly narrow pore size distribution, generally within a range of 0.7 to 1.1 *µ*m.

The microstructure of several embodiments of the present invention was analyzed by using scanning electron microscopy. Particularly, the microstructure of the filter porous layer, the bonding of the porous layer to the alumina substrate, and the bonding of the different layers were investigated.

The porous layer adhered very well to the substrate and conformed well to the substrate surface. Powder particles of the porous layer penetrated into interparticle spaces along the substrate surface. Further, the porous layer was found to be homogeneous and defect free.

Various embodiments were subjected to a four-point bend test to evaluate the mechanical behavior of the final filter structure. It was found that the porous layer provided on the substrate did not degrade the strength of the substrate, and in some cases improved the base strength of the substrate.

The polymer binder wt% (based upon 100% ceramic powder) was then evaluated in terms of the resulting filtration properties and mechanical integrity of the skin filters. A summary of the results is provided below in Table 3:

**TABLE 3**

| Polymer (wt%) (based on ceramic powder) | Filtration Properties | Mechanical Integrity |
|---|---|---|
| 5 | Good | Very Poor |
| 8 | Good | Poor |
| 10 | Good | OK |
| 15 | Good | Good |
| 20 | OK | Good |

As shown in Table 3, an increase in content of the polymer relative to the alumina powder is effective to enhance the strength of the porous layer. However, an increase in polymer percentage generally reduced the filtration properties of the filter. It was found that polymer percentages above 20% significantly reduced the filtration properties of the filter. Accordingly, the polymer percentages preferably not greater than 20 wt%, more preferably 4-15 wt%, based upon the alumina powder.

In an attempt to improve the corrosion resistance (chemical stability) of the skins in acidic and especially in basic conditions used for cleaning the filters, slurry formulations including precursors to ZrO₂ were developed. The ZrO₂-derived binder demonstrated excellent corrosion resistance. Formulation of binders made of Si:Zr ratios of 1:1 and ZrO₂ precursors alone. It was found that a mixture of Si:Zr ≤ 1 is preferred to obtain sufficient resistivity against corrosion in basic conditions. The miscibility of the two components is also very important to obtain improved corrosion resistance.

The procedure for making the zirconia-based aspect of the invention included the following steps:
1. Precursor synthesis or modification (if necessary).
2. Binder solution preparation.
3. Slurry preparation by mixing binder solutions with alumina powder (RK-02C) and solvent, as necessary.
4. Filter skin fabrication by wash coating.
5. Standard heat treatment: 5°C/min to 200°C/2 h, 10°C/min to~500°C/5h.
6. Corrosion resistance testing according to the following procedure:
   · Immersing filters in 2% citric acid, 5000 ppm H₂SO₄, and pH 12 NaOCl (5000 ppm Cl) solutions (separately) for 3 days or until degradation is observed in solution.
   · If the results in the first test were sufficient, further testing was performed by sequential immersing of filter sin 2% citric acid, followed by 5000 ppm H₂SO₄ and pH 12 NaOCl for 3 days each.
7. Samples showing good integrity after corrosion testing were evaluated by scanning electron microscopy (SEM), both before and after testing, and for mechanical integrity.

The following examples show the percentage of binder, quantities of alumina, EtO-modified PHMS, zirconia source water, and other solvent components; quantity of ammonium-acetate (when used), and the viscosity, flux, microstructure, and evaluation of corrosion resistance observed.

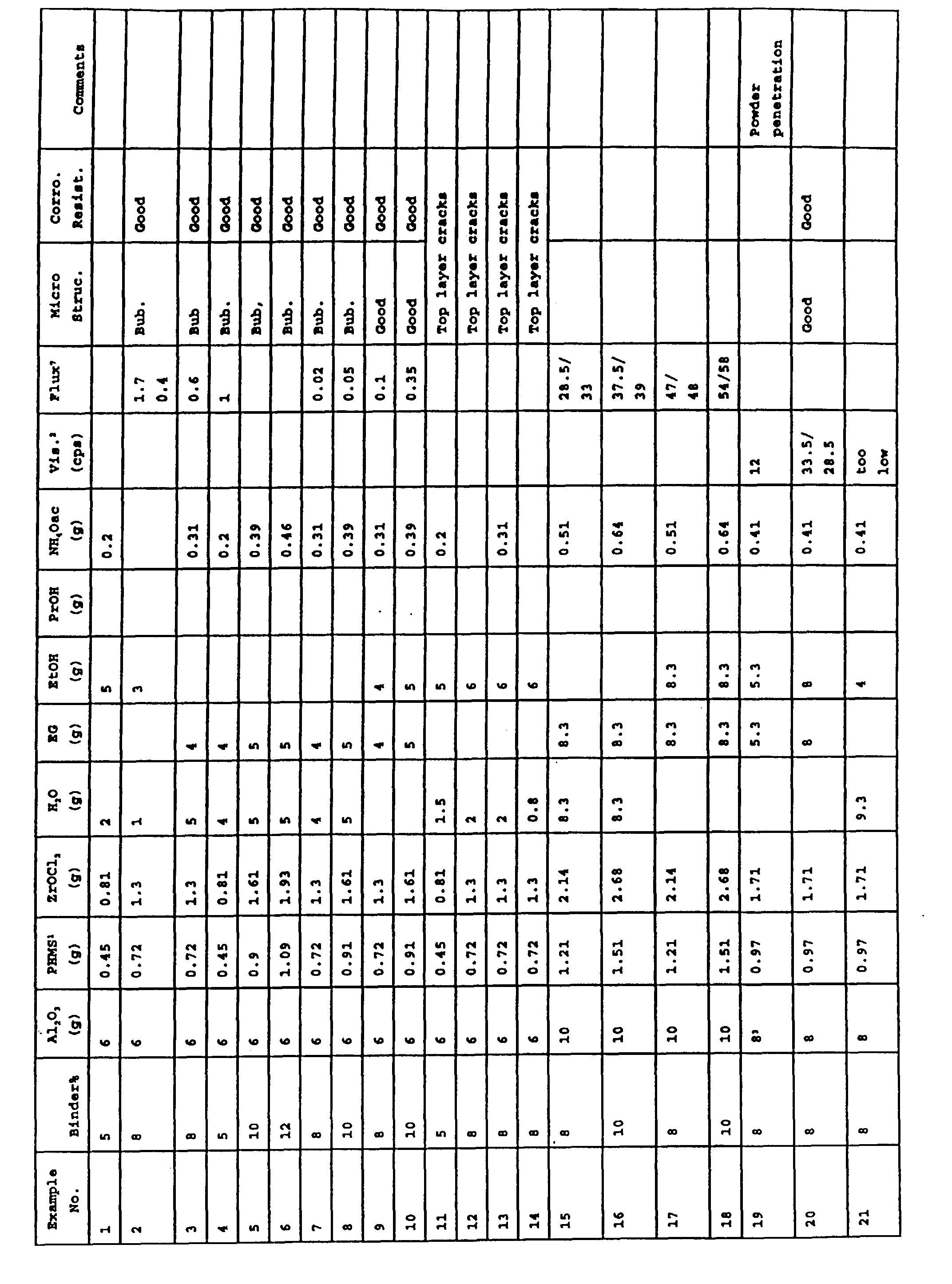

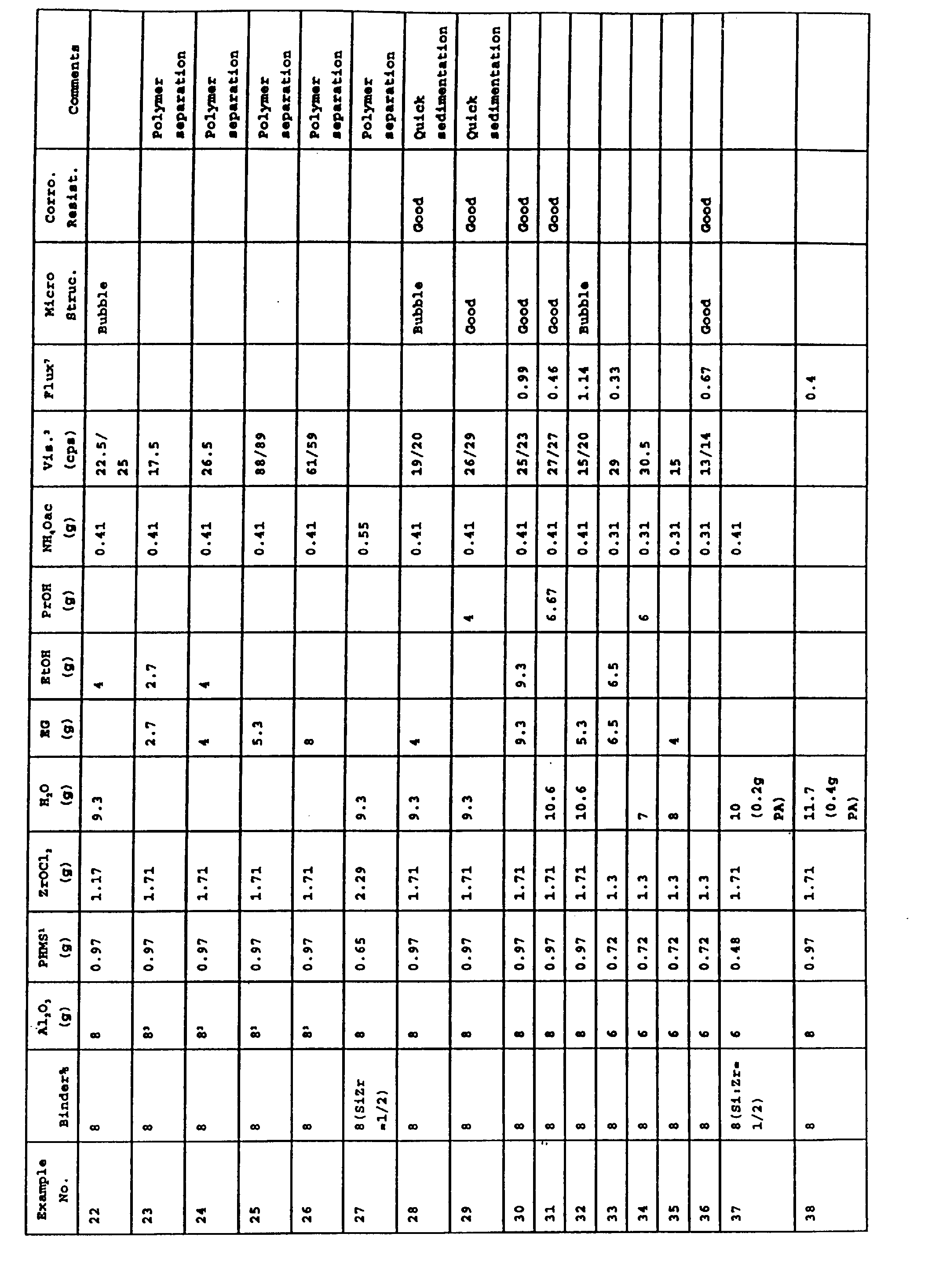

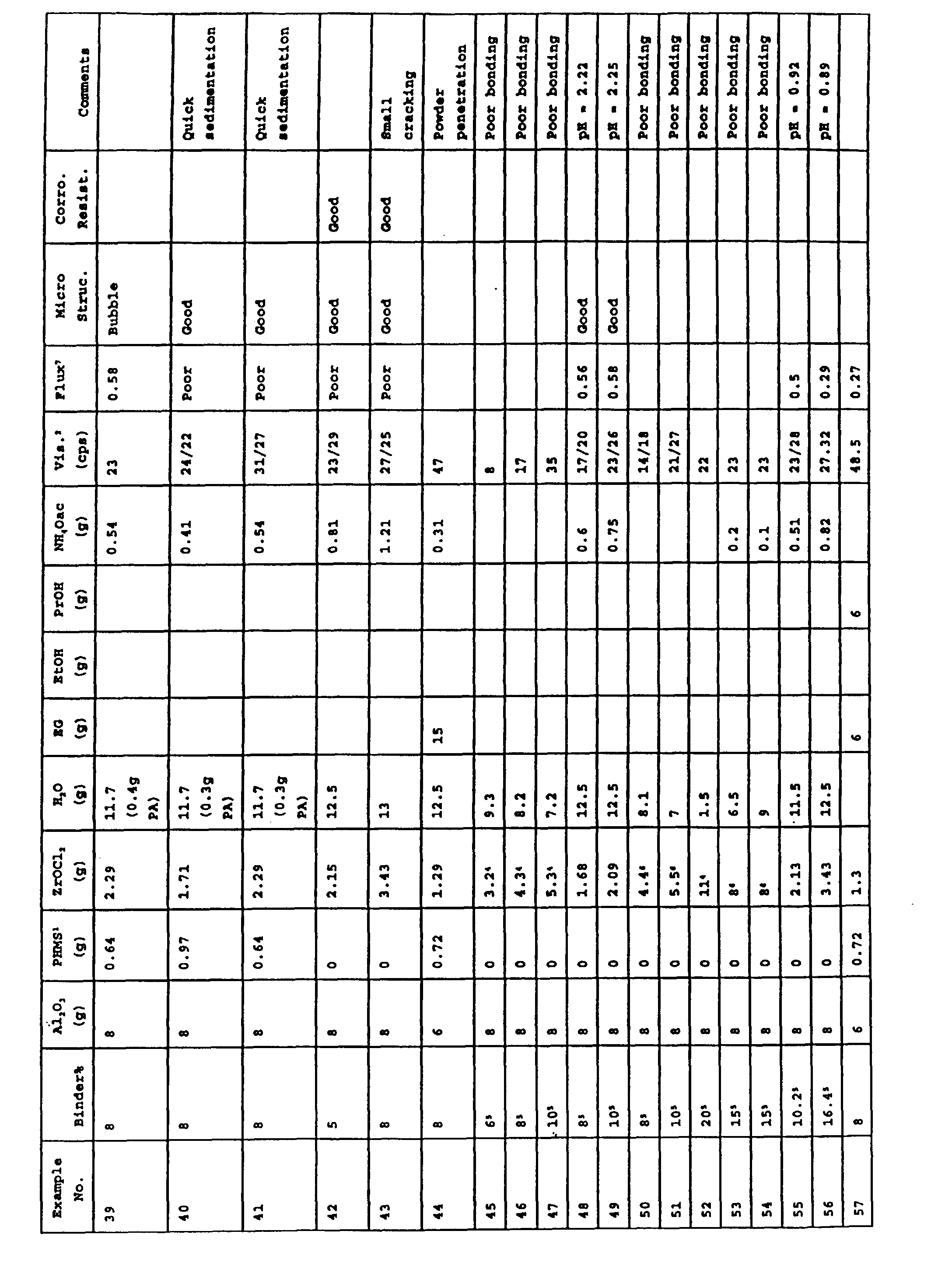

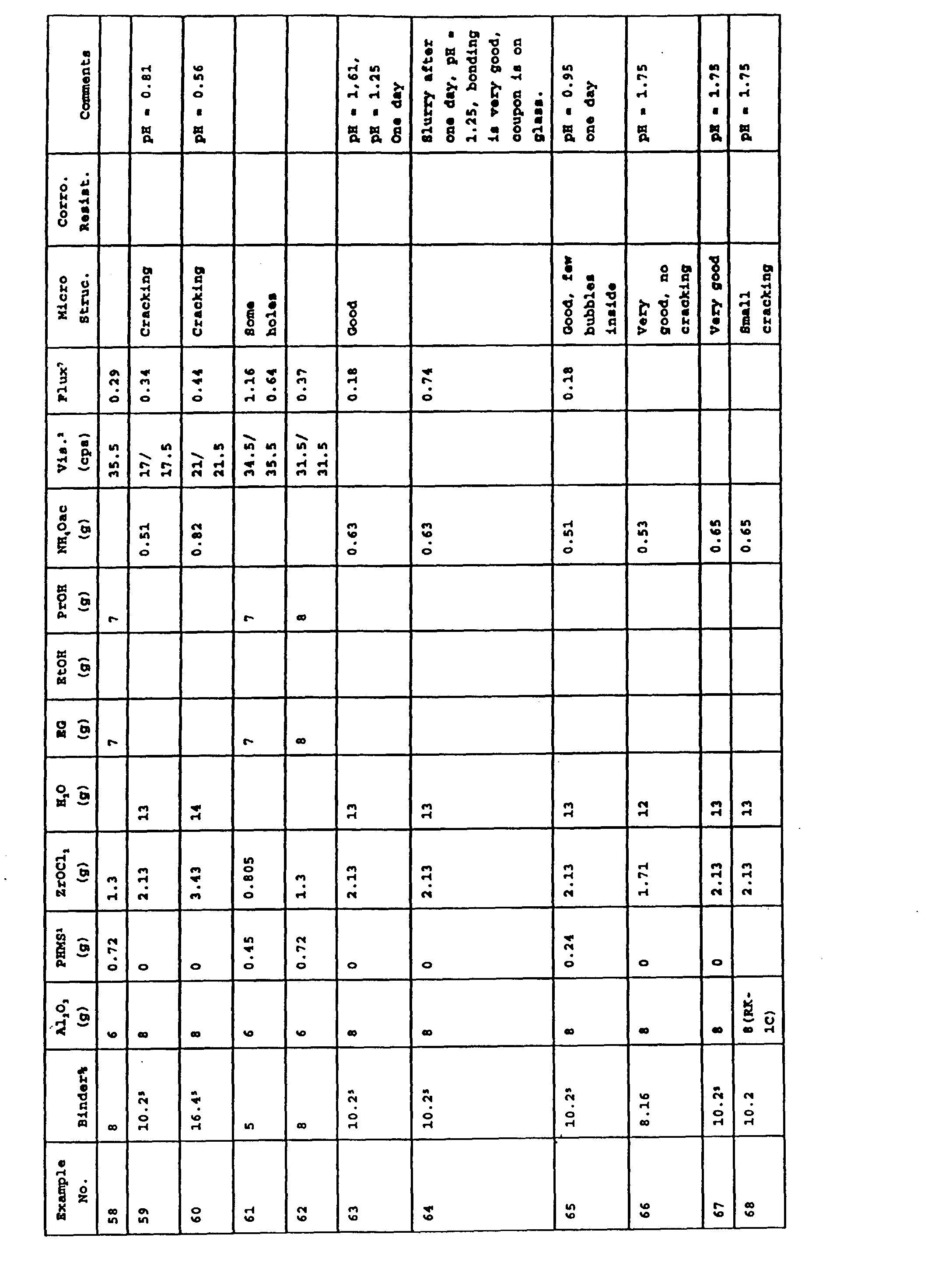

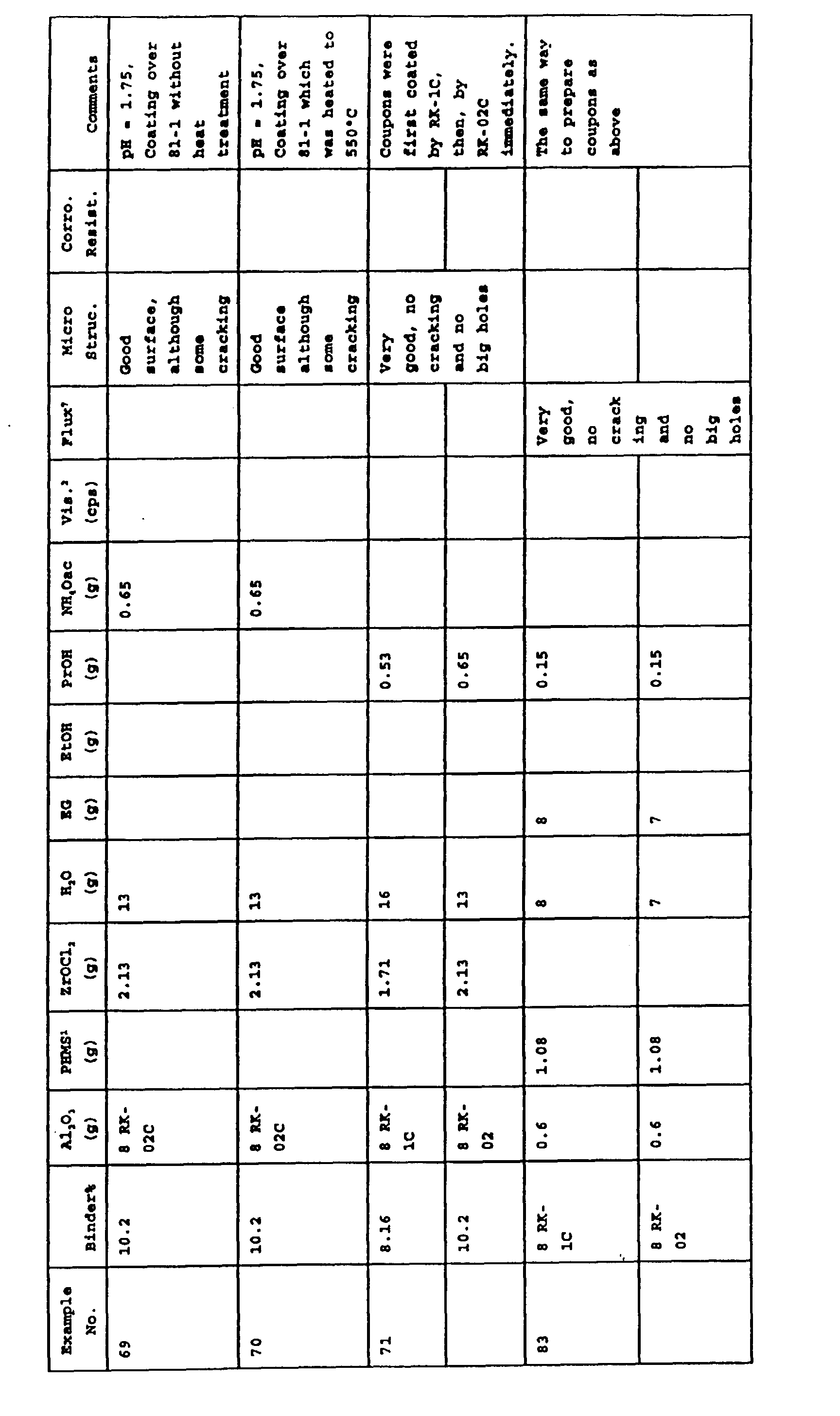

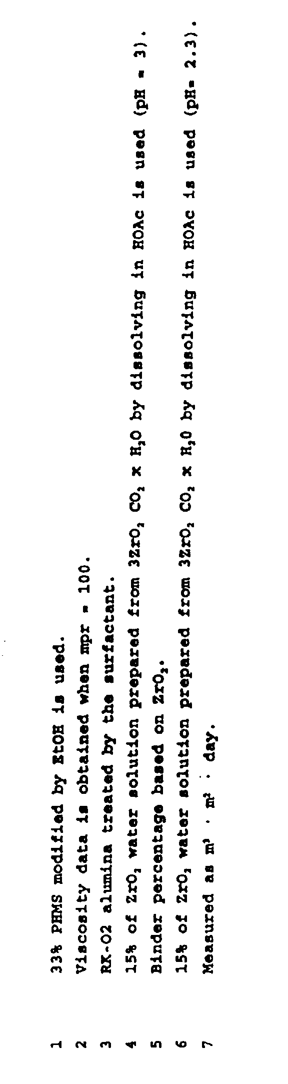

In the case of a mixed Si:Zr binder, when ethanol (rich) water is used as the solvent, cracking and top layer is always observed, which can be improved by reducing the binder percentage. However, total elimination of top layer and cracking is very difficult if not impossible since a thin top layer comprising a polymer-derived ceramic layer whose particles when in a slurry subsequently precipitate after deposition is still observed for the samples prepared using 5% binder. Top layer and cracking are caused by (1) poor solubility of the partially polymerized ZrOCl₂ in ethanol, which may cause some extent of agglomeration, and (2) quick evaporation of ethanol after the coating is made, which makes it impossible for the solvent to "filter" down any extra amount of the binder.

Bubbles are always observed for those systems in which PHMS-OEt is not well dissolved with the solvent. These systems include ethylene glycol/water, n-PrOH/water (1:1), and water bubbles are caused by fine micelles (5-10 *µ*m) of PHMS-OEt in the slurries. After coating is made, the solvent penetrates through the substrates first, then through the fine polymer particles, which can be clearly observed during coating preparation. When PHMS-OEt mixes well in the solution, no bubbles are observed.

The best systems identified for Si:Zr = 1:1 use EG/EtOH or EG/PrOH as the solvent. Both ZrOCl₂ and PHMS-OEt can dissolve in the solvent and good slurries are obtained.

Another potential problem is if a dispersion of the fine powder particles in the slurries is too good, which causes some penetration of the slurries into substrates resulting in pore clogging and subsequent poor flux. Because RK-02 has a size of 0.7 *µ*m, which is smaller than the holes in the substrates, too good a dispersion of slurries may make coating difficult due to penetration to the substrates. For example, poor results may be obtained by using slurries with surfactant-treated powder. Poor results may be obtained by using ethylene glycol as a solvent. The best slurries should have somewhat good dispersion but a certain degree of fine agglomeration is required and easy sedimentation in 10-30 minutes. Filtration properties are greatly affected by penetration of slurries to the subsurface of the substrates.
A slurry difficult to adhere may be obtained by using water as a solvent when PHMS-OEt is used. Addition of polyacrylic acid as a surfactant improves the properties of such slurries. But, PHMS-OEt still is not mixed with water; instead it forms small spherical micelles particles in slurries (oil/in water emulsion), which causes bubbles to be formed.

When ZrOCl₂ is used as the only binder component, water can be used as a solvent. Properties of the binder and consequent strength of the skin filter strongly depend on pH of the solution. When the pH of the solution is raised, zirconium oxychloride exists as a polymeric material in the solution and the binding ability of zirconium material is reduced as a result. For example, at pH = 2.2, the polymeric zirconium material gives good binding for the freshly prepared slurries, but poor binding for the slurries aged for one day. It is assumed that at this pH, the developed ZrOₐCl_{b}OH_{c} is too polymerized and there are not enough free Zr-OH sites for bonding to the alumina surface. When pH = 0.9, 5% zirconium binder gives good binding for the slurries freshly prepared or prepared for one day. However, cracking is observed. More severe cracking is observed for pH = 0.56 for those using 8% of the binder. At this stage it is believed that the binder is a monomeric or oligomeric zirconyl chloride that is not polymerized enough to serve as a ceramic filter. When pH was adjusted to 1.6 (1.3 after one day), no significant cracking is observed (very few cracks). Bonding is very good even for solution aged one day. Therefore, a pH of about 1.5 should be good for the slurries. At this pH, both good bonding to the substrate and good microstructure can be obtained.

When using zirconium carbonate instead of zirconyl chloride as the ZrO₂ source, the binding ability of the zirconium material is very poor. Poor binding is caused by the polymeric properties of the binders, formed after dissolution of zirconium carbonate in acetic acid. Unless a strong acid was used to break down the zirconium polymeric structure, it was impossible to use zirconium carbonate as a binder.

When NH₄OAc is used in Zr:Si=1:1 formulations to increase the pH of the solution, corrosion resistance of the binder materials was reduced. It is suggested that less Si-O-Zr bonding occurs under these conditions as the result of the polymerization of Zr-O-Zr in the solutions.

When RK-1C is used as an intermediate layer using 5% ZrOCl₂ as a binder (Example 68), cracking is observed. However, the cracks are well covered by the second RK-02 coating and a very smooth surface can be obtained even though some cracking is still observed.

The second fine layer (with RK-02) can be obtained in two ways. It can be prepared over the first RK-1C coating immediately after the coating is prepared and is still wet. It can be prepared after the first layer coating is heated at 550°C. Both give similar results. However, less good coating (adequate top layers) can be obtained when the RK-02C coating is prepared over the first one which was heated at 150°C, to cure the zirconyl chloride binders. It seems that this temperature is not high enough to cure the binder which is then dissolved when redispersed in the top layers water-based slurry.

SEM (scanning electron microscopy) pictures for Examples 71 to 74 show that cracking has been eliminated in the skin and all big holes have been eliminated. More dilute solutions are used for the intermediate layers in Examples 82 and 83 in an attempt to form only a very thin intermediate layer. The intermediate layer only covers big holes at the surface of the porous alumina substrates. Therefore, only very thin layer will play the role as confirmed by the results.

While the examples described herein show the use of silica and zirconium as ceramic precursors, other candidates for such precursors include polysiloxanes, polycarbosilanes, partially hydrolyzed sol gel derivatives of metallic oxides such as zirconium oxide, titanium oxide, and aluminum oxide and metal phosphate binders based on Al, Ca, Mg, Zn, Zr, Sn, and mixtures thereof. Use of such alternatives is within the scope of the present invention.

## Claims

1. A process for forming a ceramic filter, comprising:
forming a slurry containing a ceramic powder, and one or both of a source of zirconia-based ceramic precursor and a preceramic polymer capable of being cured, and a solvent for said precursor and/or said preceramic polymer;
depositing said slurry on a porous substrate to form a layer;
curing said precursor and/or preceramic polymer to form a nonfusible binder; and;
heating said deposited slurry to form a porous layer on the substrate.

2. The process of claim 1, wherein the porous layer formed has a porosity within a range of 20-70 vol %.

3. The process of claim 2, wherein the porous layer formed has a porosity within a range of 30-70 vol %.

4. The process of claim 1, 2 or 3, further comprising pyrolyzing said filter to convert the cured precursor to a ceramic material.

5. The process of claim 4, wherein said pyrolysis is carried out at a temperature of at least 450°C.

6. The process of claim 5, wherein said pyrolysis is carried out at a temperature of 500-700°C.

7. The process of any one of claims 1 to 6, wherein said curing step is a dehydrocoupling step carried out before forming the slurry in order to modify the polymer prior to formulation.

8. The process of any one of claims 1 to 6, wherein said curing step is a dehydrocoupling step carried out after depositing the slurry on the substrate.

9. The process of claim 8, wherein the dehydrocoupling step is carried out by a catalytic reaction.

10. The process of any one of claims 1 to 9, wherein the porous substrate has a porosity of 20-70 vol %.

11. The process of claim 10, wherein the porous substrate has a porosity of 30-70 vol %.

12. The process of any one of claims 1 to 11, wherein said ceramic powder comprises A1₂O₃.

13. The process of any one of claims 1 to 12, wherein said substrate comprises A1₂O₃.

14. The process of any one of claims 1 to 13, wherein the preceramic polymer comprises at least one of PHMS, EtO-PHMS and HO-PHMS.

15. The process of claim 14, wherein said slurry contains not greater than 20 wt % of said polymer.

16. The process of any one of claims 1 to 15, further comprising additional steps of depositing the slurry to form a multiple layer filter.

17. The process of any one of claims 1 to 16, further comprising soaking the substrate in a liquid before coating the slurry on the substrate.

18. The process of claim 17, wherein said liquid comprises the solvent of the slurry.

19. The process of any one of claims 1 to 18, wherein said source of zirconia precursor is ZrOCl₂.

20. A ceramic filter comprising:
a porous substrate; and
at least one porous layer formed on said porous substrate, said porous layer comprising ceramic particles bonded together by an intergranular ceramic product formed by curing and heating a zirconia-based ceramic precursor and a product formed by curing and heating a preceramic polymer.

21. A ceramic filter, comprising:
a porous substrate; and
at least one porous layer formed on said porous substrate, said porous layer comprising ceramic particles bonded together by an intergranular phase comprising one or both of zirconia and a ceramic binder formed by converting a preceramic polymer to said ceramic binder by pyrolysis.

22. A ceramic filter comprising:
a porous substrate; and
at least one porous layer formed on said porous substrate, said porous layer comprising ceramic particles bonded with an intergranular phase comprised of a source of zirconia.

23. The filter of claim 20, 21 or 22, wherein the porous layer has a porosity within a range of 20-70 vol %.

24. The filter of claim 23, wherein the porous layer has a porosity within a range of 30-70 vol %.

25. The filter of any one of claims 20 to 24, wherein the substrate has a porosity of within a range of 20-70 vol %.

26. The filter of claim 25, wherein the substrate has a porosity within a range of 30-70 vol %.

27. The filter of any one of claims 20 to 26, wherein the porous layer comprises A1₂O₃.

28. The filter of claim 27, wherein the porous layer further comprises silica.

29. The filter of claim 28, wherein the ration of zirconia to silica is equal to or greater than 1:1.

30. The filter of any one of claims 20 to 29, wherein said precursor of zirconia is ZrOC1₂.

31. The filter of any one of claims 20 to 30, wherein the substrate comprises A1₂O₃.
